# EUROPEAN PATENT SPECIFICATION

(11) **EP 3 730 008 B1**
(45) Date of publication and mention of the grant of the patent: **17.11.2021**
(21) Application number: 19170528.4
(22) Date of filing: 23.04.2019
(51) Int. Cl.: A47J 31/40

(54) **AUTOMATIC COFFEE MACHINE AND METHOD OF FILLING A WATER TANK OF AN AUTOMATIC COFFEE MACHINE**
AUTOMATISCHE KAFFEEMASCHINE UND VERFAHREN ZUM FÜLLEN EINES WASSERBEHÄLTERS EINER AUTOMATISCHEN KAFFEEMASCHINE
MACHINE À CAFÉ AUTOMATIQUE ET PROCÉDÉ DE REMPLISSAGE D'UN RÉSERVOIR D'EAU D'UNE MACHINE À CAFÉ AUTOMATIQUE

(43) Date of publication of application: 28.10.2020
(73) Proprietor: BSH Hausgeräte GmbH, 81739 München (DE)
(72) Inventor: Winkler, Gerhard, 83334 Inzell (DE); Reichel, Thomas, 83278 Traunstein (DE); Eder, Florian, 83132 Pittenhart (DE)

(56) References cited:
- US-A1- 2007 068 393
- US-A1- 2010 139 361
- US-A1- 2012 285 986
- US-A1- 2018 365 924
- US-B1- 6 759 072
- US-B2- 9 351 600

## Description

### Background of the invention

The present invention relates to an automatic coffee machine and a method of filling a water tank of an automatic coffee machine with a mains water connection and further comprising a water tank, a pump, a brewing unit, a coffee line with a spout and an automatic drainage system.

### State of the art

Automatic coffee machines are known in the state of the art and are commonly used not only in households but also in restaurants, catering organizations and other high volume food production institutions. Typically, most of the processes in the automatic coffee machines from grinding the correct quantity of beans, through the brewing process to the final cleaning are performed in automatic way without user involvement. For the purpose of further automation a mains water connection is provided. The benefits from such solution is that there is no need to refill the water tank regularly what saves the time and is very convenient for the user. Moreover, the consumer is not limited by the volume of the water tank.

The patent application WO 2017/ 140 618 A1 discloses a beverage maker, in particular an electrically operated coffee machine, having a water tank, which can be filled with water which can be used to prepare a beverage by means of the beverage maker, wherein the beverage maker is designed for connection to a drinking-water network via an inflow, characterized in that in a state in which the beverage maker is connected to the drinking-water-network via the inflow, the water tank can be removed from the beverage maker manually by the beverage-maker user and/or can be filled with the water optionally by a /the beverage-maker user filling water manually or by drinking water being supplied from the drinking-water network via the inflow.

The patent application DE 10 2013 223 609 A1 discloses a method for operating a beverage preparation device, in particular a coffee machine for household purposes, comprising the following steps: a) determining residual value (ARtₓ; ERₐₓ) for a quantity of residue per device actuation, b) adding the residual values (ERₐₓ₋₂; ERₐₓ₋₁; ERₐₓ) of several successive device actuations to a sum value (ER_{ges}), c) comparing the sum value (ERG) with a predefined limit value (ERₛₒₗₗ), d) outputting a singnal (S) when the limit value (ERₛₒₗₗ) is exceeded. The invention also relates to a correspondingly equipped preparation device.

The patent application FR 2365996 A1 discloses the continuous water supply system for coffee or tea machines by a quantity of water permanently maintained in the smaller cylinder of a working cylinder which consists of a pair of cylinders of different crosssectional area so as to multiply the forces. By means of this smaller cylinder the brewing water at normal temperature can be conveyed through a heating agent into the brewing chamber. A pipe line can be provided between the working cylinder and the standard cold water supply so as to connect the smaller cylinder to the mains supply by means of a branch pipe and non-return valve. A further branch pipe can connect the larger cylinder to the mains supply via a three-way electrovalve, one of the paths of which leads to a waste pipe. The normal pressure of the cold water mains supply is sufficient to move the piston in the cylinders.

The patent application US 2018 365 924 A1 discloses a method for remotely providing service functionalities for a beverage preparation machine. The beverage preparation machine is adapted for preparing a beverage by receiving a capsule in a capsule extraction unit, circulating a carrier liquid, such as water in particular heated water, through said capsule in the extraction unit and by dispensing a resulting beverage. The machine is in data communication with a remote server via a communication network. The machine monitors parameters related to the machine and submits the monitored parameters to the server. The server initiates a service functionality depending on the submitted parameters. The present invention further relates to a beverage preparation machine adapted to support such a method and to a system for remotely providing service functionalities for a beverage preparation machine at a customer location.

The patent application US 2007 068 393 A1 discloses a machine for brewing a beverage such as coffee which includes a chamber and a piston assembly disposed in the chamber. The chamber is operable to receive a liquid such as water and a flavor base such as ground coffee, and to allow the beverage to brew from a mixture of the liquid and the base. The piston assembly is operable to filter a solid such as spent coffee grounds from the brewed beverage by moving in a first direction, and to force the filtered beverage out of the chamber by moving in a second direction. By modifying or automating some or all steps of the French press brewing technique, such a machine may control one or more of the brewing parameters with a level of precision that yields brewed coffee having a uniform taste from cup to cup. Furthermore, such a machine may brew the coffee with a speed that renders the machine suitable for use by establishments that serve significant amounts of coffee.

The patent application US 2010 139 361 A1 discloses a calibration arrangement for calibrating an apparatus that is arranged to prepare a beverage from water and an instant product, for different types of instant product. The calibration arrangement comprises: input means for entering a setting into the apparatus, said setting providing the apparatus with dispense information of a particular instant product type, thereby enabling the apparatus to dispense appropriate amounts of said instant product; conversion means for providing the settings for the respective instant product types. The conversion means and the input means function brand independently, that is without making use of or referring to a brand of the instant product type or some other type indication.

The document US 9 351 600 B2 discloses a machine for a given geographical market and for preparing a beverage from a combination of a first ingredient and a second ingredient. The machine includes first and second containers, container arranged for storing one of these ingredients or a packaging thereof. Such machine is so arranged as to let a user select a quantity ratio of the first and second ingredients for preparation of a beverage. The containers have normal storage volumes for their respective ingredient or packaging. The first and second normal storage volumes of the containers have a volume ratio equivalent to a ratio of respective normal volumes necessary for storing the first and second ingredients or packaging thereof used in an estimated average quantity ratio for preparing such beverage in the given geographical market.

Presented solutions do not provide a coffee machine in which the water tank always contains fresh water what influences positively the quality of the beverage.

### The aim of the invention

It is the object of the present invention to provide a further development with and advantage over the state of the art.

### Summary of the invention

This object is solved by an automatic coffee machine according to claim 1 in which a water amount is calculated based on a consumer behavior by a calculating system of the coffee machine which calculates the water amount based on information from a flow meter and the water tank is filed up with a variable amount of water depending on the data received from the calculating system and the water tank is automatically emptied and/or refilled after each activation and/or deactivation of the coffee machine.

The coffee machine comprises a water tank, a pump, a brewing unit, a coffee line with a spout and other elements like valves or sensors which are necessary to perform the brewing process. The coffee machine has a mains water connection what means that the water tank of the device is supplied with water straight form the water supply network of the building. The positive effect is that fresh water is provided in the device without user involvement and the water is always present inside the water tank.

The coffee machine is equipped also with an automatic drainage system what means that the drip tray of the device is connected to the building sewage system and the drainage of the waste water from the drip tray of the coffee machine is performed automatically without the consumer participation. The positive effect is time saving.

In the coffee machine according to the invention the water amount is calculated based on a consumer behavior by a calculating system of the coffee machine and the water tank is filled up with a variable amount of water depending on the data received from the calculating system. The calculating system calculates the water amount through the flow meter which provides information about the water quantity being used over specified time period. Based on the collected and processed data, the water tank is filled up with a corresponding amount of water. The complete calculation is performed by the control unit with a special software. The positive effect is that the water amount inside the water tank is adjusted to the consumer needs. The water is always fresh which positively influences the quality of the prepared beverage. The water tank is automatically emptied after each deactivation of the coffee machine and the water tank is automatically refilled after each activation of the coffee machine. The advantage is that the water inside the water tank is always fresh. The user is also able to decide if the function of automatic emptying and refilling the water tank is needed and can turn off this functionality.

In the preferred embodiment of the invention the calculating system of the coffee machine determines an average amount of water over a specified period of time. The time period is set up by the user. The user can arbitrary choose the time period in which the calculation will be performed e.g. a week which in his view is the most representative time period in which the calculating system will be counting the number of the prepared coffee drinks and the quantity of the consumed water. Based on this calculation the calculating system will determine the average water consumption and will adjust the water amount. The user is also allowed to determine a fixed water amount by which the water tank will be filled.

In another embodiment of the invention the water tank is equipped with a water level sensors. The sensors are provided for detection the water level inside the water tank. If the water level is below the minimum level the coffee machine takes the water through the mains water connector form the mains water system of the building. The positive effect is that the water is always present inside the water tank.

Advantageously, the water tank is automatically filled with a calculated amount of water after the water level inside the water tank reaches the minimum level.

In the preferred embodiment of the invention the coffee machine is adapted to receive a control command from an external device. The device is designed in such a way to be controlled by the external device e.g. a smartphone with a dedicated application through which communication with the device is possible. The user can send a control command to the device and order an immediate action of the coffee machine e.g. start the water tank emptying or the like. Moreover, the user has also the opportunity to see when the coffee machine was last in operation. The device can also communicate with the consumer and e.g. ask if he need a coffee since the coffee machine was not working by long period of time.

The object of the present invention is also solved by a method of filling a water tank of an automatic coffee machine according to claim 7 whereby in the first step the user sets up the calculation period over which the measurement will be performed. The calculation period is set up arbitrary by the user which decides which period of time will be the most accurate for performing measurements.

In the second step of the method the calculating system is collecting the data about a beverage type and counts a beverage number and the amount of water used for preparing the beverages which were prepared at the previously determined calculation period. Based on the data the calculation system determines the average water consumption and stores the data in a memory of the coffee machine.

Next the calculating system calculates how much water is needed in the water tank based on an average water consumption over a calculated period of time which was set previously by the user. The water amount is calculated and includes a safety factor to assure the water availability in case the number of prepared beverages exceeds the average number or the average quantity of the consumed water.

The last step of the method according to the present invention is filling the water tank with the calculated amount of water taking into consideration the safety factor as well.

Based on the calculation and the stored data the device gets the fresh water through the mains water connection from the water supply system of the building in which the coffee machine is used. The positive effect of filling the water tank of the coffee machine straight form the water supply system is time savings for the user and continuous presence of the fresh water inside the water tank of the coffee machine.

With the automatic coffee machine according to the invention and to the method according to the invention the water tank of the coffee machine is filled automatically from the mains water system of the building. The water amount is calculated based on the user behavior what benefits in that the water consumption is reduced and the water in the water tank is always fresh what positively influences the beverage quality.

## Claims

1. An automatic coffee machine with a mains water connection and further comprising a water tank, a pump, a brewing unit, a coffee line with a spout and an automatic drainage system, wherein a water amount is calculated based on a consumer behavior by a calculating system of the coffee machine which calculates the water amount based on information from a flow meter and the water tank is filled up with a variable amount of water depending on the data received from the calculating system and the water tank is automatically emptied after each deactivation of the coffee machine and/or is automatically refilled after each activation of the coffee machine.

2. The automatic coffee machine according to claim 1, **characterized in that** the calculating system of the coffee machine determines an average amount of water over a specified period of time.

3. The automatic coffee machine according to claim 2, **characterized in that** the time period is set up by the user.

4. The automatic coffee machine according to any of the preceding claims, **characterized in that** the water tank is equipped with a water level sensors.

5. The automatic coffee machine according to any of the preceding claims, **characterized in that** the water tank is automatically filled with a calculated amount of water after the water level inside the water tank reaches the minimum level.

6. The automatic coffee machine according to any of the preceding claims, **characterized in that** the coffee machine is adapted to receive a control command from an external device.

7. A method of filling a water tank of an automatic coffee machine according to any of the preceding claims comprising the following steps:
- setting up the calculation period by the user,
- counting and saving the data about a beverage type and a beverage number by the calculating system in the previously set calculation period,
- calculating a water amount which is needed for filling the water tank based on an average water consumption over a calculated period,
- filing the water tank with the calculated amount of water.

## Patentansprüche

1. Kaffeeautomat mit einem Leitungswasseranschluss und ferner einem Wassertank, einer Pumpe, einer Brüheinheit, einer Kaffeeleitung mit einer Tülle und einem automatischen Ablaufsystem, wobei auf der Grundlage eines Verbraucherverhaltens eine Wassermenge von einem Berechnungssystem der Kaffeemaschine berechnet wird, das die Wassermenge auf der Grundlage von Informationen aus einem Durchflussmesser berechnet, und der Wassertank je nach den aus dem Berechnungssystem empfangenen Daten mit einer veränderlichen Wassermenge aufgefüllt und nach jeder Deaktivierung der Kaffeemaschine automatisch entleert und/oder automatisch wieder aufgefüllt wird.

2. Kaffeeautomat nach Anspruch 1, **dadurch gekennzeichnet, dass** das Berechnungssystem der Kaffeemaschine eine durchschnittliche Wassermenge für einen vorgegebenen Zeitraum ermittelt.

3. Kaffeeautomat nach Anspruch 2, **dadurch gekennzeichnet, dass** der Zeitraum vom Benutzer eingestellt wird.

4. Kaffeeautomat nach einem der vorhergehenden Ansprüche, **dadurch gekennzeichnet, dass** der Wassertank mit Wasserstandsensoren ausgestattet ist.

5. Kaffeeautomat nach einem der vorhergehenden Ansprüche, **dadurch gekennzeichnet, dass** der Wassertank automatisch mit einer berechneten Wassermenge gefüllt wird, wenn der Wasserstand in dem Wassertank den Mindeststand erreicht hat.

6. Kaffeeautomat nach einem der vorhergehenden Ansprüche, **dadurch gekennzeichnet, dass** die Kaffeemaschine so ausgelegt ist, dass sie einen Steuerbefehl von einer externen Vorrichtung empfängt.

7. Verfahren zum Füllen eines Wassertanks eines Kaffeeautomaten nach einem der vorhergehenden Ansprüche mit folgenden Schritten:
- Einrichten des Berechnungszeitraums durch den Benutzer,
- Zählen und Speichern der Daten zu einem Getränketyp und einer Getränkeanzahl durch das Berechnungssystem in dem zuvor eingestellten Berechnungszeitraum,
- Berechnen einer Wassermenge, die zum Füllen des Wassertanks benötigt wird, auf der Grundlage eines durchschnittlichen Wasserverbrauchs für einen berechneten Zeitraum,
- Füllen des Wassertanks mit der berechneten Wassermenge.

## Revendications

1. Machine à café automatique comprenant un raccordement d'eau courante et comprenant en outre un réservoir d'eau, une pompe, une unité de percolation, une conduite de café dotée d'un bec verseur et un système de vidange automatique, dans laquelle une quantité d'eau est calculée sur la base d'un comportement de consommateur par un système de calcul de la machine à café qui calcule la quantité d'eau sur la base d'informations d'un débitmètre et le réservoir d'eau est rempli avec une quantité d'eau variable en fonction des données reçues du système de calcul et le réservoir d'eau est automatiquement vidé après chaque désactivation de la machine à café et/ou est rempli automatiquement après chaque activation de la machine à café.

2. Machine à café automatique selon la revendication 1, **caractérisée en ce que** le système de calcul de la machine à café détermine une quantité moyenne d'eau pendant une période de temps spécifiée.

3. Machine à café automatique selon la revendication 2, **caractérisée en ce que** la période de temps est paramétrée par l'utilisateur.

4. Machine à café automatique selon l'une quelconque des revendications précédentes, **caractérisée en ce que** le réservoir d'eau est équipé de capteurs de niveau d'eau.

5. Machine à café automatique selon l'une quelconque des revendications précédentes, **caractérisée en ce que** le réservoir d'eau est rempli automatiquement avec une quantité calculée d'eau après que le niveau d'eau dans le réservoir d'eau atteint le niveau minimum.

6. Machine à café automatique selon l'une quelconque des revendications précédentes, **caractérisée en ce que** la machine à café est adaptée pour recevoir une instruction de commande d'un dispositif externe.

7. Procédé de remplissage d'un réservoir d'eau d'une machine à café automatique selon l'une quelconque des revendications précédentes, comprenant les étapes suivantes :
- paramétrage de la période de calcul par l'utilisateur,
- comptage et sauvegarde des données ayant trait à un type de boisson et un nombre de boissons par le système de calcul dans la période de calcul précédemment fixée,
- calcul d'une quantité d'eau qui est nécessaire pour remplir le réservoir d'eau sur la base d'une consommation d'eau moyenne pendant une période calculée,
- remplissage du réservoir d'eau avec la quantité d'eau calculée.
